(19) Europäisches Patentamt
European Patent Office
Office européen des brevets

(11) **EP 3 838 862 A1**

(12) **EUROPÄISCHE PATENTANMELDUNG**

(43) Veröffentlichungstag:
**23.06.2021 Patentblatt 2021/25**

(21) Anmeldenummer: **19217407.6**

(22) Anmeldetag: **18.12.2019**

(51) Int Cl.:
*C04B 26/02* (2006.01)     *C04B 26/06* (2006.01)
*C04B 26/16* (2006.01)     *C04B 111/00* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
**KH MA MD TN**

(71) Anmelder: **Hilti Aktiengesellschaft**
**9494 Schaan (LI)**

(72) Erfinder:
• **Dierker, Sascha**
**86504 Merching (DE)**
• **Brunner, Andreas**
**86159 Augsburg (DE)**

(74) Vertreter: **Hilti Aktiengesellschaft**
**Corporate Intellectual Property**
**Feldkircherstrasse 100**
**Postfach 333**
**9494 Schaan (LI)**

(54) **VERWENDUNG EINER REAKTIVHARZ-ZUSAMMENSETZUNG FÜR DIE CHEMISCHE BEFESTIGUNG EINES VERANKERUNGSMITTELS IN EINEM BOHRLOCH**

(57) Die vorliegende Erfindung betrifft die Verwendung einer Reaktivharz-Zusammensetzung für die chemische Befestigung eines Verankerungsmittels in einem Bohrloch.

**Beschreibung**

Die vorliegende Erfindung betrifft die Verwendung einer Reaktivharz-Zusammensetzung für die chemische Befestigung eines Verankerungsmittels in einem Bohrloch.

**Hintergrund**

Die Verwendung von chemischen Befestigungsmitteln auf Basis radikalisch härtbarer Harze ist seit langem bekannt. Im Bereich der Befestigungstechnik hat sich die Verwendung von Harzen als organisches Bindemittel für die chemische Befestigungstechnik, z.B. als Bestandteil einer Dübelmasse ("chemischer Dübel"), durchgesetzt. Es handelt sich bei solchen Dübelmassen um Verbundmassen, die als Mehrkomponenten-Systeme, üblicherweise Zweikomponenten-Systeme konfektioniert sind, wobei eine Komponente (die Reaktivharzkomponente) das radikalisch härtbare Harz und die andere Komponente (die Härterkomponente) einen Initiator (für die Radikalbildung) enthält. Andere, übliche Bestandteile, wie beispielsweise Additive, Füllstoffe, Beschleuniger, Inhibitoren, Lösungsmittel und Reaktivverdünner, können in der einen und/oder der anderen Komponente enthalten sein. Durch Vermischen der beiden Komponenten wird dann durch Radikalbildung die Härtungsreaktion, d.h. die Polymerisation, in Gang gebracht und das Harz zum Duromeren gehärtet.

Als radikalisch härtbare Harze werden in konventionellen Reaktivharz-Zusammensetzungen üblicherweise Vinylesterharze und insbesondere Vinylesterurethanharze eingesetzt, die durch Reaktion von monomeren oder polymeren aromatischen Diisocyanaten und Hydroxy-substituierten Methacrylaten, wie Hydroxyalkylmethacrylat, erhältlich sind. Die EP 0 713 015 B1 beispielsweise beschreibt Dübelmassen mit ungesättigten Polyesterharzen, Vinylesterharzen einschließlich Vinylesterurethanharzen als Basisharze. Auch die DE 10 2011 017 626 B4 beschreibt Vinylesterurethanharze. Als Radikalquelle für die radikalische Härtung werden typischerweise Peroxide, wie Diacetylperoxid, Hydroperoxide oder Peroxyester zugesetzt.

Die Aufgabe der Erfindung ist es, eine Reaktivharz-Zusammensetzung zur Verwendung für die chemische Befestigung eines Verankerungsmittels in einem Bohrloch bereitzustellen, welche dem somit chemisch befestigten Verankerungsmittel-Reaktivharz-Verbund eine erhöhte Verbundspannung verleiht.

Eine weitere Aufgabe der Erfindung ist es, eine Reaktivharz-Zusammensetzung zur Verwendung für die chemische Befestigung eines Verankerungsmittels in einem Bohrloch bereitzustellen, welche dem somit chemisch befestigten Verankerungsmittel-Reaktivharz-Verbund eine erhöhte Wärmeformbeständigkeit verleiht.

Diese Aufgaben werden durch die Verwendung einer Reaktivharz-Zusammensetzung für die chemische Befestigung eines Verankerungsmittels in einem Bohrloch gemäß Anspruch 1 gelöst.

**Beschreibung der Erfindung**

Die vorliegende Erfindung zeichnet sich insbesondere durch die Verwendung einer Reaktivharz-Zusammensetzung für die chemische Befestigung eines Verankerungsmittels in einem Bohrloch umfassend eine Harzkomponente (A) enthaltend ein Reaktivharz, und eine Härterkomponente (B) enthaltend ein Härtungsmittel, wobei die Reaktivharz-Zusammensetzung Härtungsmittel in einer Menge von 15 Gew.-% bis 45 Gew.-% bezogen auf das Reaktivharz enthält, aus.

1. Herstellung Backbone-Harz/Reaktivharz-Masterbatch

Ein Digylcidylether, beispielsweise Bisphenol-A-diglycidylether, und eine $\alpha,\beta$-ungesättigte Carbonsäure, beispielsweise Methacrylsäure, werden in Anwesenheit eines Katalysators und eines Inhibitors (dient dazu, das durch die Polymerisation gebildete Backbone-Harz zu stabilisieren) zur Reaktion gebracht. Hierbei entsteht das Backbone-Harz.

Das nach Ende der Reaktion erhaltene Reaktionsgemisch wird als Reaktivharz-Masterbatch bezeichnet. Dieses wird nicht weiter aufgearbeitet, d.h. das Backbone-Harz wird nicht isoliert.

2. Herstellung Reaktivharz

Das Backbone-Harz bzw. Reaktivharz-Masterbatch, beispielsweise das Reaktionsgemisch aus der unter 1. beschriebenen Herstellung Backbone-Harz/Reaktivharz-Masterbatch wird versetzt mit einem Beschleuniger, ein oder mehreren Reaktivverdünnern und ein oder mehreren Inhibitoren.

Die Reihenfolge, in welcher die einzelnen Komponenten des Reaktivharzes miteinander vermischt werden, ist nicht relevant. Typischerweise wird der Beschleuniger vorgelegt, und dann werden nacheinander der Reaktivharz-Masterbatch, der Reaktivverdünner, und der Inhibitor zugesetzt.

Ein erster Gegenstand der Erfindung ist die Verwendung einer Reaktivharz-Zusammensetzung für die chemische Befestigung eines Verankerungsmittels in einem Bohrloch umfassend eine Harzkomponente (A) enthaltend ein Reaktivharz, und eine Härterkomponente (B) enthaltend ein Härtungsmittel, wobei die Reaktivharz-Zusammensetzung Härtungsmittel in einer Menge von mindestens 12 Gew.-% oder mehr und höchstens 48 Gew.-% oder weniger bezogen auf das Reaktivharz enthält.

Ein zweiter Gegenstand der Erfindung ist ein Verfahren zur chemischen Befestigung eines Verankerungsmittels in einem Bohrloch, gekennzeichnet dadurch, dass zur Befestigung eine Reaktivharz-Zusammensetzung verwendet wird, wobei die Reaktivharz-Zusammensetzung umfasst:

eine Harzkomponente (A) enthaltend ein Reaktivharz, und
eine Härterkomponente (B) enthaltend ein Härtungsmittel, wobei
die Reaktivharz-Zusammensetzung Härtungsmittel in einer Menge von mindestens 12 Gew.-% oder mehr und höchstens 48 Gew.-% oder weniger bezogen auf das Reaktivharz enthält.

Zum besseren Verständnis der Erfindung werden die folgenden Erläuterungen zur hierin verwendeten Terminologie als sinnvoll erachtet.
Im Sinne der Erfindung bedeuten die verwendeten Begriffe:

- *"Backbone-Harz"* ein üblicherweise festes oder hochviskoses radikalisch polymerisierbares Harz, welches durch Polymerisation (z.B. nach Zugabe eines Initiators in Gegenwart eines Beschleunigers) härtet;

- *"Reaktivharz-Masterbatch"* das Reaktionsprodukt der Reaktion zur Herstellung des Backbone-Harzes, also eine Mischung aus Backbone-Harz, Inhibitor und weiteren Bestandteilen (z.B. Katalysator) der Reaktionsmischung;

- *"Reaktivhart"* eine Mischung aus Reaktivharz-Masterbatch, einem oder mehreren Inhibitoren, einem Reaktivverdünner und gegebenenfalls weiteren Additiven; das Reaktivharz ist typischerweise flüssig oder viskos und kann zu einer Reaktivharzkomponente weiterverarbeitet werden; hierin wird das Reaktivharz auch als *"Harzmischung"* bezeichnet;

- *"Inhibitor"* einen Stoff, der eine unerwünschte radikalische Polymerisation während der Synthese oder der Lagerung eines Harzes oder einer Harz-haltigen Zusammensetzung unterdrückt (diese Stoffe werden in Fachkreisen auch als *"Stabilisator"* bezeichnet) bzw. der eine radikalische Polymerisation eines Harzes nach Zugabe eines Initiators (üblicherweise in Verbindung mit einem Beschleuniger) zeitlich verzögert (diese Stoffe werden in Fachkreisen auch als *"Inhibitor"* bezeichnet - die jeweilige Bedeutung des Begriffes erschließt sich aus dem Kontext);

- *"Initiator"* oder *"Härtungsmittel"* einen Stoff, der (üblicherweise in Kombination mit einem Beschleuniger) reaktionsinitiierende Radikale bildet;

- *"Beschleuniger"* ein Reagenz, welches mit dem Initiator eine Reaktion eingeht, so dass bereits bei niedrigen Temperaturen durch den Initiator größere Mengen an Radikalen erzeugt werden, oder welches die Zerfallsreaktion des Initiators katalysiert;

- *"Reaktiwerdünner"* flüssige oder niedrigviskose Monomere und Backbone-Harze, welche andere Backbone-Harze oder den Reaktivharz-Masterbatch verdünnen und dadurch die zu deren Applikation notwendige Viskosität verleihen, zur Reaktion mit dem Backbone-Harz befähigte funktionelle Gruppen enthalten und bei der Polymerisation (Härtung) zum überwiegenden Teil Bestandteil der gehärteten Masse (z.B. des Mörtels) werden; Reaktivverdünner werden auch co-polymerisierbares Monomer genannt;

- *"Gelzeit"*, $t_{g25°C}$, die Zeit (t) der Härtungsphase eines wie hierin definierten Reaktivharzes ($t_{hg25°C}$) oder einer wie hierin definierten Reaktivharzkomponente ($t_{mg25°C}$), in der sich die Temperatur von einer Starttemperatur von 25°C bei einer Gelzeitmessung auf beispielsweise 50°C erhöht; ein Verfahren zur Bestimmung der Gelzeit ist in den Beispielen beschrieben;

- *"Reaktivharzkomponente"* eine flüssige oder viskose Mischung aus Reaktivharz und Füllstoffen und optional weiteren Komponenten, z.B. Additiven; typischerweise ist die Reaktivharzkomponente eine der beiden Komponenten eines Zweikomponenten-Reaktivharz-Systems zur chemischen Befestigung;

- *"Härterkomponente"* eine Zusammensetzung, die einen Initiator für die Polymerisation eines Backbone-Harzes enthält; die Härterkomponente kann fest oder flüssig sein und neben dem Initiator ein Lösungsmittel sowie Füllstoffe und/oder Additive enthalten; typischerweise ist die Härterkomponente neben der Reaktivharzkomponente die andere der beiden Komponenten eines Zweikomponenten-Reaktivharz-Systems zur chemischen Befestigung;

- *"Zweikomponenten-System"* bzw. *"Zweikomponenten-Reaktivharz-System"* ein Reaktivharz-System, das zwei voneinander getrennt gelagerte Komponenten, eine Reaktivharzkomponente (A) und eine Härterkomponente (B), umfasst, so dass eine Härtung des in der Reaktivharzkomponente enthaltenen Backbone-Harzes erst nach dem Mischen der beiden Komponenten erfolgt;

- *"Mehrkomponenten-System"* bzw. *"Mehrkomponenten-Reaktivharz-System"* ein Reaktivharz-System, das mehrere voneinander getrennt gelagerte Komponenten umfasst, unter anderem eine Reaktivharzkomponente (A) und eine Härterkomponente (B), so dass eine Härtung des in der Reaktivharzkomponente enthaltenen Backbone-Harzes erst nach dem Mischen aller Komponenten erfolgt;

- *"(Meth)acryl.../...(meth)acryl...",* dass sowohl die "Methacryl.../...methacryl..."- als auch die "Acryl.../...acryl... "-Verbindungen gemeint sein sollen; bevorzugt sind in der vorliegenden Erfindung "Methacryl.../... methacryl..."-Verbindungen gemeint;

- *"Epoxy(meth)acrylat"* ein Epoxidharz, das Acrylat- oder Methacrylatgruppen aufweist und im wesentlichen Epoxygruppen-frei ist;

- *"Alkyl"* einen gesättigten Kohlenwasserstoffrest, der verzweigt oder unverzweigt sein kann; bevorzugt ein $C_1$-$C_{20}$-Alkyl, besonders bevorzugt ein $C_1$-$C_4$-Alkyl, also ein Alkyl ausgewählt aus der Gruppe bestehend aus Methyl, Ethyl, n-Propyl, iso-Propyl, n-Butyl, iso-Butyl, und tert-Butyl; Methyl, Ethyl und tert-Butyl sind besonders bevorzugt, und ganz besonders bevorzugt ist Methyl;

- *"Hydroxyalkyl"* ein Alkyl, das mindestens eine Hydroxylgruppe als Substituenten trägt;

- *"Alkenyl"* einen ungesättigten Kohlenwasserstoffrest mit mindestens einer Doppelbindung, der verzweigt oder unverzweigt sein kann; bevorzugt ein $C_2$-$C_{20}$-Alkenyl, besonders bevorzugt ein $C_2$-$C_6$-Alkenyl, also ein Alkenyl ausgewählt aus der Gruppe bestehend aus Ethenyl, Propenyl, Butenyl, Pentenyl und Hexenyl; Ethenyl, Propenyl und Butenyl sind besonders bevorzugt, und ganz besonders bevorzugt ist Ethenyl;

- *"Hydroxy-Alkenyl"* ein Alkenyl, das mindestens eine Hydroxylgruppe als Substituenten trägt;

- *"Alkinyl"* einen ungesättigten Kohlenwasserstoffrest mit mindestens einer Dreifachbindung, der verzweigt oder unverzweigt sein kann; bevorzugt ein $C_2$-$C_{20}$-Alkinyl, besonders bevorzugt ein $C_2$-$C_6$-Alkinyl, also ein Alkinyl ausgewählt aus der Gruppe bestehend aus Ethinyl, Propinyl, Butinyl, Pentinyl und Hexinyl; Ethinyl, Propinyl und Butinyl sind besonders bevorzugt, und ganz besonders bevorzugt ist Ethinyl

- *"Hydroxy-Alkinyl"* ein Alkinyl, das mindestens eine Hydroxylgruppe als Substituenten trägt;

- *"kalthärtend"* dass eine Harzmischung oder ein Reaktivharz-System bei Raumtemperatur vollständig aushärten kann;

- *"ein"*, *"eine"*, *"einer"* als Artikel vor einer chemischen Verbindungsklasse, z.B. vor dem Wort "Epoxymethacrylat", dass eine oder mehrere unter diese chemische Verbindungsklasse fallende Verbindungen, z.B. verschiedene Epoxymethacrylate, gemeint sein können. In einer bevorzugten Ausführungsform ist mit diesem Artikel nur eine einzelne Verbindung gemeint;

- *"mindestens ein"*, *"mindestens eine"*, *"mindestens einer"* zahlenmäßig *"ein oder mehrere"*. In einer bevorzugten Ausführungsform ist mit diesem Begriff zahlenmäßig *"ein"*, *"eine"*, *"einer"* gemeint;

- *"enthalten"*, *"umfassen"* und *"beinhalten",* dass neben den genannten Bestandteilen noch weitere vorhanden sein können. Diese Begriffe sind einschließlich gemeint und umfassen daher auch *"bestehen aus"*. "Bestehen aus" ist abschließend gemeint und bedeutet, dass keine weiteren Bestandteile vorhanden sein können. In einer bevorzugten Ausführungsform bedeuten die Begriffe *"enthalten"*, *"umfassen"* und *"beinhalten"* den Begriff *"bestehen aus"*;

- *"etwa"* oder *"circa"* oder "ca." vor einem Zahlenwert einen Bereich von ± 5% dieses Wertes, bevorzugt ± 2% dieses

Wertes, bevorzugter $\pm$ 1% dieses Wertes, besonders bevorzugt $\pm$ 0% dieses Wertes (also genau diesen Wert);

- ein durch Zahlen begrenzter Bereich, z.B. *"von 10 Gew.-% bis 20 Gew.-%"*, dass die beiden Eckwerte und jeder Wert innerhalb dieses Bereichs einzeln offenbart sind.

Alle in diesem Text genannten Normen (z.B. DIN-Normen) wurden in der zum Anmeldetag dieser Anmeldung aktuellen Ausgabe verwendet.

Wie bereits oben erläutert betrifft die Erfindung die Verwendung einer Reaktivharz-Zusammensetzung für die chemische Befestigung eines Verankerungsmittels in einem Bohrloch umfassend eine Harzkomponente (A) enthaltend ein Reaktivharz, und eine Härterkomponente (B) enthaltend ein Härtungsmittel, wobei die Reaktivharz-Zusammensetzung Härtungsmittel in einer Menge von mindestens 12 Gew.-% oder mehr und höchstens 48 Gew.-% oder weniger bezogen auf das Reaktivharz enthält.

Der prozentuale Anteil des Härtungsmittels in der Reaktivharz-Zusammensetzung beträgt, bezogen auf das Reaktivharz, vorteilhafterweise mindestens 14 Gew.-% oder mehr, bevorzugt mindestens 16 Gew.-% oder mehr, und am bevorzugtesten mindestens 18 Gew.-% oder mehr.

Der prozentuale Anteil des Härtungsmittels in der Reaktivharz-Zusammensetzung beträgt, bezogen auf das Reaktivharz, vorteilhafterweise höchstens 46 Gew.-% oder weniger, bevorzugt höchstens 44 Gew.-% oder weniger, und am bevorzugtesten höchstens 42 Gew.-% oder weniger.

Beispielsweise beträgt der prozentuale Anteil des Härtungsmittels in der Reaktivharz-Zusammensetzung bezogen auf das Reaktivharz vorzugsweise mindestens 14 Gew.-% oder mehr und höchstens 46 Gew.-% oder weniger, bevorzugt mindestens 16 Gew.-% oder mehr und höchstens 44 Gew.-% oder weniger, und am bevorzugtesten mindestens 18 Gew.-% oder mehr und höchstens 42 Gew.-% oder weniger.

In einer Ausführungsform umfasst das Reaktivharz Vinylesterharz.

In einer Ausführungsform ist das Vinylesterharz ein Vinylesterurethanharz, vorzugsweise ein Urethan(meth)acrylatharz bzw. UMA-Harz.

In einer weiteren Ausführungsform ist das Vinylesterharz ein ethoxyliertes Bisphenol-A-di(meth)acrylat. Vorzugsweise hat das ethoxylierte Bisphenol-A-di(meth)acrylat einen Ethoxylierungsgrad von 2 bis 10, bevorzugter von 2 bis 4.

Im Sinne der Erfindung sind Vinylesterharze Oligomere oder Polymere mit mindestens einer (Meth)acrylat-Endgruppe, so genannte (Meth)acrylat-funktionalisierte Harze, wozu auch Urethan(meth)acrylat-Harze und Epoxy(meth)acrylate zählen.

Vinylesterharze, die nur in Endstellung ungesättigten Gruppen aufweisen, werden zum Beispiel durch Umsetzung von Epoxid-Oligomeren oder -Polymeren (z.B. Bisphenol A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylat-funktionalisierte Harze und Harze, die durch Umsetzung eines Epoxid-Oligomeren oder -Polymeren mit Methacrylsäure oder Methacrylamid, bevorzugt mit Methacrylsäure, erhalten werden. Beispiele solcher Verbindungen sind aus den Anmeldungen US 3297745 A, US 3772404 A, US 4618658 A, GB 2217722 A1, DE 3744390 A1 und DE 4131457 A1 bekannt.

In diesem Zusammenhang wird auf die Anmeldung US2011071234 verwiesen, deren Inhalt hiermit in diese Anmeldung aufgenommen wird.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Als Vinylesterharz besonders geeignet sind ethoxyliertes Bisphenol-A-di(meth)acrylat mit einem Ethoxylierungsgrad von 2 bis 10, vorzugsweise von 2 bis 4, difunktionelle, trifunktionelle oder höherfunktionelle Urethan(meth)acrylat-Oligomere oder Mischungen dieser härtbaren Bestandteile.

Ganz besonders geeignet sind die bekannten Reaktionsprodukte aus Di- oder Polyisocyanaten und Hydroxyalkylmethylacrylaten, wie sie beispielsweise in der DE 2 312 559 A1 beschrieben sind, Addukte aus (Di)Isocyanaten und 2,2-Propanbis-[3-(4-phenoxy)-1,2-hydroxypropan-1-methacrylat] nach der US-PS 3 629 187 sowie die Addukte aus Isocyanaten und Methacryloylalkylethern, -alkoxybenzolen bzw. -alkoxycycloalkanen, wie sie in der EP 44352 A1 beschrieben sind. In diesem Zusammenhang wird auf die DE 2312559 A1, DE 19902685 A1, EP 0684906 A1, DE 4111828 A1 und DE 19961342 A1 verwiesen. Selbstverständlich können auch Gemische aus geeigneten Monomeren verwendet werden.

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator bzw. Härtungsmittel, wie Peroxiden, polymerisiert werden können, enthalten, zum Beispiel reaktive Gruppen, die von der Itaconsäure, Citraconsäure und allylischen Gruppen und dergleichen abgeleitet sind, wie sie beispielsweise in der WO 2010/108939 A1 (Itaconsäureester) beschrieben sind.

Der prozentuale Anteil (in Gew.-% des Reaktivharzes) von Backbone-Harz in dem Reaktivharz beträgt vorteilhafterweise mehr als etwa 5%, bevorzugt mehr als etwa 15%, und besonders bevorzugt mehr als etwa 20%. Der prozentuale Anteil (in Gew.-% des Reaktivharzes) von Backbone-Harz in dem Reaktivharz beträgt vorteilhafterweise von etwa 5% bis etwa 90%, bevorzugt von etwa 8% bis etwa 80%, bevorzugter von etwa 10% bis etwa 60%, bevorzugter von etwa 20% bis etwa 55%, noch bevorzugter von etwa 25% bis etwa 55%, besonders bevorzugt von etwa 25% bis etwa 50% und ganz besonders bevorzugt von etwa 28% bis etwa 45%.

Sowohl zur Stabilisierung des Reaktivharzes oder der das Reaktivharz enthaltenden Reaktivharzkomponente (A) oder anderer das Reaktivharz enthaltender Zusammensetzungen als auch zur Einstellung der Harzreaktivität sind im Reaktivharz ein oder mehrere Inhibitoren vorhanden.

Hierfür sind die für radikalisch polymerisierbare Verbindungen üblicherweise verwendeten Inhibitoren geeignet, wie sie dem Fachmann bekannt sind. Bevorzugt sind diese Inhibitoren unter phenolischen Inhibitoren und nicht-phenolischen Inhibitoren, insbesondere Phenothiazinen, ausgewählt.

Als phenolische Inhibitoren sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Catechole, wie Brenzkatechin, und Catecholderivate, wie Butylbrenzkatechine, wie 4-tert-Butylbrenzkatechin und 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, geeignet. Diese Inhibitoren sind oft Bestandteil von kommerziellen radikalisch härtenden Reaktivharzkomponenten.

Als nicht-phenolische Inhibitoren kommen vorzugsweise Phenothiazine, wie Phenothiazin und/oder Derivate oder Kombinationen davon, oder stabile organische Radikale, wie etwa Galvinoxyl- und $N$-Oxyl-Radikale, insbesondere vom Piperidinyl-$N$-oxyl- oder Tetrahydropyrrol-$N$-oxyl-Typ, in Betracht, wie Aluminium-$N$-nitrosophenylhydroxylamin, Diethylhydroxylamin, Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim, TEMPOL, TEMPO und dergleichen.

Ferner können in para-Stellung zur Hydroxylgruppe substituierte Pyrimidinol- oder Pyridinol-Verbindungen, wie sie in der Patentschrift DE 10 2011 077 248 B1 beschrieben sind, als Inhibitoren eingesetzt werden.

Als stabile $N$-Oxyl-Radikale können beispielsweise solche verwendet werden, wie sie in der DE 199 56 509 A1 und der DE 195 31 649 A1 beschrieben sind. Derartige stabile Nitroxylradikale sind vom Typ Piperidinyl-$N$-oxyl oder Tetrahydropyrrol-$N$-oxyl oder eine Mischung daraus.

Bevorzugte stabile Nitroxylradikale sind ausgewählt aus der Gruppe bestehend aus 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet) und Mischungen aus zwei oder mehreren dieser Verbindungen, wobei 1-Oxyl-2,2,6,6-tetramethylpiperidin-4-ol (TEMPOL) besonders bevorzugt ist.

Bevorzugt sind der oder die Inhibitoren ausgewählt aus der Gruppe bestehend aus N-Oxyl-Radikalen, Catecholen, Catecholderivaten und Phenothiazinen und ein Gemisch von zwei ider mehreren davon. Besonders bevorzugt sind der oder die Inhibitoren ausgewählt aus der Gruppe bestehend aus Tempol, Catecholen und Phenothiazinen. Ganz besonders bevorzugt sind die in den Beispielen verwendeten Inhibitoren, bevorzugt etwa in den in den Beispielen angegebenen Mengen.

Die Inhibitoren können, abhängig von den gewünschten Eigenschaften des Reaktivharzes, entweder alleine oder als Kombination von zweien oder mehreren davon verwendet werden. Die Kombination von phenolischen und nicht-phenolischen Inhibitoren ist bevorzugt.

Der Inhibitor oder die Inhibitormischung wird zugesetzt in der Fachwelt bekannten üblichen Mengen, bevorzugt in einer Menge von etwa 0,0005 bis etwa 2 Gew.-% (bezogen auf das - letztendlich damit hergestellte - Reaktivharz), stärker bevorzugt von etwa 0,01 bis etwa 1 Gew.-% (bezogen auf das Reaktivharz), noch stärker bevorzugt von etwa 0,05 bis etwa 1 Gew.-% (bezogen auf das Reaktivharz).

Ferner kann das Reaktivharz mindestens einen Reaktivverdünner enthalten.

Geeignete Reaktivverdünner sind niederviskose, radikalisch co-polymerisierbare Verbindungen, bevorzugt kennzeichnungsfreie Verbindungen.

Geeignete Reaktivverdünner sind in den Anmeldungen EP 1 935 860 A1 und DE 195 31 649 A1 beschrieben. Vorzugsweise enthält das Reaktivharz als Reaktivverdünner einen (Meth)acrylsäureester, wobei besonders bevorzugt aliphatische oder aromatische $C_5$-$C_{15}$-(Meth)acrylate ausgewählt werden. Geeignete Beispiele umfassen: 2-, 3-Hydroxypropyl(meth)acrylat (HP(M)A), 1,2-Ethandioldi(meth)acrylat, 1,3-Propandioldi(meth)acrylat, 1,3-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, Ethyltriglykol(meth)acrylat, *N,N*-Dimethylaminoethyl(meth)acrylat, *N,N*-Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.$^{26}$-decan, Dicyclopentenylo-xyethylcrotonat, 3-(Meth)acryloyl-oxymethyltricylo-5.2.1.0.$^{26}$-decan, 3-(Meth)cyclopentadienyl(meth)acrylat, und Decalyl-2-(meth)acrylat; PEG-di(meth)acrylate, wie PEG200-di(meth)acrylat, Tetraehtylenglykoldi(meth)acrylat, Solketal(meth)acrylat, Cyclohexyl(meth)acrylat, Phenoxyethyldi(meth)acrylat, Methoxyethyl(meth)acrylat, *tert*-Butyl(meth)acrylat und Norbornyl(meth)acrylat. Methacrylate sind gegenüber Acrylaten bevorzugt. Besonders bevorzugt sind 2- und 3-Hydroxypropylmethacrylat (HPMA), 1,2-Ethandioldimethacrylat, 1,4-Butandioldimethacrylat (BDDMA), 1,3-Butandioldimethacrylat, Trimethylolpropantrimethacrylat, Acetoacetoxyethylmethacrylat, Isobornylmethacrylat, Bisphenol-A-methacrylat, Trimethylcyclohexylmethacrylat, 2-Hydroxyethylmethacrylat, PEG200-dimethacrylat und Norbornylmethacrylat. Ganz besonders bevorzugt sind 1,4-Butandioldimethacrylat und ein Gemisch aus 2- und 3-Hydroxypropylmethacrylat (HPMA), oder eine Mischung aus diesen drei Methacrylaten. Am bevorzugtesten ist ein Gemisch aus 2- und 3-Hydroxypropylmethacrylat (HPMA). Grundsätzlich können auch andere übliche radikalisch polymerisierbare Verbindungen, allein oder im Gemisch mit den (Meth)acrylsäureestern, als Reaktivverdünner eingesetzt werden, z. B. Styrol, α-Methylstyrol, alkylierte Styrole, wie tert-Butylstyrol, Divinylbenzol und Vinyl- sowie Allylverbindungen, wobei die nicht kennzeichnungspflichtigen Vertreter davon bevorzugt sind. Beispiele für derartige Vinyl- oder Allylverbindungen sind Hydroxybutylvinylether, Ethylenglycoldivinylether, 1,4-Butandioldivinylether, Trimethylolpropandivinylether, Trimethylolpropantrivinylether, Mono-, Di-, Tri-, Tetra- und Polyalkylenglycolvinylether, Mono-, Di-, Tri-, Tetra- und Polyalkylenglycolallylether, Adipinsäuredivinylester, Trimethylolpropandiallylether und Trimethylolpropantriallylether.

Der bzw. die Reaktivverdünner ist bzw. sind bevorzugt in einer Menge von 0 bis etwa 80 Gew.-%, besonders bevorzugt von etwa 10 bis etwa 60 Gew.-%, noch bevorzugter von etwa 20 bis etwa 50 Gew.-%, bezogen auf das Reaktivharz, im Reaktivharz vorhanden.

Zweckmäßig wird ein Peroxid als Härtungsmittel verwendet. Alle dem Fachmann bekannten Peroxide, die zum Härten von Vinylesterharzen verwendet werden, können eingesetzt werden. Derartige Peroxide umfassen organische und anorganische Peroxide, entweder flüssig oder fest, wobei auch Wasserstoffperoxid verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO-), Hydroperoxide (der Formel -OOH) und dergleichen. Diese können als Oligomer oder Polymer vorliegen. Eine umfassende Reihe an Beispielen für geeignete Peroxide ist zum Beispiel in der Anmeldung US 2002/0091214 A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketonperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. In einer bevorzugten Ausführungsform wird zum Härten Benzoylperoxid (BPO) oder tert-Butylperoxybenzoat verwendet.

Das Peroxid kann in seiner Reinform oder als Bestandteil einer Mischung verwendet werden. Typischerweise wird es als Bestandteil einer Mischung verwendet, insbesondere als Bestandteil einer Härterkomponente (B) eines Reaktivharz-Systems. Die in den Beispielen verwendete Härterkomponente bzw. eine Härterkomponenten mit denselben Bestandteilen ist besonders bevorzugt.

Die Reaktivharzkomponente (A) kann neben dem Reaktivharz Füllstoffe und/oder Additive enthalten. Es sei darauf hingewiesen, dass einige Stoffe sowohl als Füllstoff und, ggf. in modifizierter Form, auch als Additiv verwendet werden können. Beispielsweise dient pyrogene Kieselsäure in ihrer polaren, nicht nachbehandelten Form eher als Füllstoff und in ihrer apolaren, nachbehandelten Form eher als Additiv. In Fällen, in denen genau derselbe Stoff als Füllstoff oder Additiv verwendet werden kann, soll seine Gesamtmenge die hierin festgelegte Obergrenze für Füllstoffe vorteilhafterweise nicht überschreiten.

Zur Herstellung einer Reaktivharzkomponente für bauliche Anwendungen, insbesondere für die chemische Befestigung, können dem Reaktivharz übliche Füllstoffe zugegeben werden. Diese Füllstoffe sind typischerweise anorganische Füllstoffe, wie beispielsweise weiter unten beschrieben.

Der Anteil des Reaktivharzes in der Reaktivharzkomponente beträgt bevorzugt von etwa 10 bis etwa 70 Gew.-%, vorzugsweise von etwa 15 bis etwa 60 Gew.-%, bezogen auf die Reaktivharzkomponente. Dementsprechend beträgt der Anteil der gesamten Füllstoffe und Additive bevorzugt von etwa 90 bis etwa 30 Gew.-%, vorzugsweise von etwa 85 bis etwa 40 Gew.-%, bezogen auf die Reaktivharzkomponente.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z.B. pyrogene Kieselsäure, insbesondere polare, nicht nachbehandelte pyrogene Kieselsäure), Silikate, Aluminiumoxide (z.B. Tonerde), Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z.B. Aluminatzement (oft auch als Tonerdezement bezeichnet) oder Portlandzement), Metalle, wie Aluminium, Ruß, ferner Holz, mineralische oder organische Fasern, oder dergleichen, oder Gemische von zwei oder mehr davon Verwendung. Die Füllstoffe können in beliebigen Formen vorliegen, beispielsweise als Pulver oder Mehl, oder als Formkörper, z.B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von etwa 10 mm und einen Minimaldurchmesser von etwa 1 nm. Das heißt, der Durchmesser ist etwa 10 mm oder irgendein Wert von weniger als etwa 10 mm, aber mehr als etwa 1 nm. Bevorzugt ist der maximale Durchmesser ein Durchmesser von etwa 5 mm, bevorzugter von etwa 3 mm, noch bevorzugter von etwa 0,7 mm. Ganz besonders bevorzugt ist ein maximaler Durchmesser von etwa 0,5 mm. Der bevorzugtere Minimaldurchmesser ist etwa 10 nm, noch bevorzugter etwa 50 nm, ganz besonders bevorzugt etwa 100 nm. Durchmesserbereiche, die sich durch Kombination dieser maximalen Durchmesser und Minimaldurchmesser ergeben, sind besonders bevorzugt. Bevorzugt und deutlicher verstärkend wirken sich jedoch die globulären, inerten Stoffe (Kugelform) aus. Auch Core-Shell-Partikel, bevorzugt in Kugelform, können als Füllstoffe verwendet werden.

Bevorzugte Füllstoffe sind ausgewählt aus der Gruppe bestehend aus Zement, Kieselsäure, Quarz, Quarzsand, Quarzmehl, Korund und Mischungen aus zwei oder mehreren davon. Für die Reaktivharzkomponente (A) besonders bevorzugt sind Füllstoffe ausgewählt aus der Gruppe bestehend aus Zement, pyrogener Kieselsäure, insbesondere unbehandelter, polarer pyrogener Kieselsäure, Quarzsand, Quarzmehl, Korund und Mischungen aus zwei oder mehreren davon.

Als Additive in der Reaktivharzkomponente (A) finden übliche Additive Verwendung, also Thixotropiermittel, wie gegebenenfalls organisch oder anorganisch nachbehandelte pyrogene Kieselsäure (falls sie nicht schon als Füllstoff verwendet wird), insbesondere apolar nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Antistatikmittel, Verdickungsmittel, Flexibilisatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon. Auch nicht reaktive Verdünnungsmittel (Lösungsmittel) können, vorzugsweise in einer Menge bis zu 30 Gew.-%, bezogen auf die Gesamtmenge der Reaktivharzkomponente enthalten sein, wie Niederalkylketone, z.B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktivharzkomponente enthalten sein. Bevorzugt ist mindestens ein Thixotropiermittel als Additiv vorhanden, besonders bevorzugt eine organisch oder anorganisch nachbehandelte pyrogene Kieselsäure, ganz besonders bevorzugt eine apolar nachbehandelte pyrogene Kieselsäure, z.B. mit Polydimethylsiloxan (PDMS) nachbehandelte pyrogene Kieselsäure, insbesondere bevorzugt die in den Beispielen verwendete apolar nachbehandelte pyrogene Kieselsäure.

In dieser Hinsicht wird Bezug genommen auf die Anmeldungen WO 02/079341 und WO 02/079293 sowie WO 2011/128061 A1, deren diesbezüglicher Inhalt hiermit in diese Anmeldung aufgenommen wird.

In einer Ausführungsform kann die Reaktivharzkomponente zusätzlich einen Haftvermittler enthalten. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung einer Zweikomponenten-Dübelmasse z.B. in mit einem Diamantbohrer gebohrten Bohrlöchern von Bedeutung und erhöht die Versagensverbundspannung. Geeignete Haftvermittler sind aus der Gruppe der Silane, die mit weiteren reaktiven organischen Gruppen funktionalisiert sind und in das Polymernetzwerk eingebunden werden können, ausgewählt. Diese Gruppe umfasst z.B. 3-(Meth)acryloyloxypropyltrimethoxysilan, 3-(Meth)acryloyloxypropyltriethoxysilan, 3-(Meth)acryloyloxymethyltrimethoxysilan, 3-(Meth)acryloyloxymethyltriethoxysilan, Vinyltrimethoxysilan, Vinyltriethoxysilan, funktionalisiertes Tetraethoxysilan, funktionalisiertes Tetramethoxysilan, funktionalisiertes Tetrapropoxysilan, funktionalisiertes Ethyl- oder Propylpolysilikat, und Gemische von zwei oder mehr davon. In dieser Hinsicht wird Bezug genommen auf die Anmeldung DE 10 2009 059210, deren diesbezüglicher Inhalt hiermit in diese Anmeldung aufgenommen wird.

Der Haftvermittler ist zweckmäßig in Mengen von etwa 1 bis etwa 10 Gew.-% bezogen auf das Gesamtgewicht der Reaktivharzkomponente (A) enthalten.

Die vorliegende Erfindung betrifft auch die Verwendung eines Reaktivharz-Systems zur chemischen Befestigung eines Verankerungsmittels in einem Bohrloch. Das erfindungsgemäße Reaktivharz-System ist ein Zwei- oder Mehrkomponenten-System, bevorzugt ein Zweikomponenten-System. Eine der Komponenten ist die erfindungsgemäße Reaktivharzkomponente (A), die andere eine Härterkomponente (B) in den Ausführungsformen wie hierin beschrieben.

# EP 3 838 862 A1

Letztere enthält ein Härtungsmittel, mit dem bei Vermischen der Komponenten die Polymerisation des Reaktivharzes in Gang gesetzt wird.

Bei einer bevorzugten Ausführungsform des erfindungsgemäßen Reaktivharz-Systems ist das Reaktivharz-System ein Zweikomponenten-System und enthält die Reaktivharzkomponente (A) neben dem erfindungsgemäßen Reaktivharz zusätzlich noch einen Füllstoff wie hierin beschrieben, und die Härterkomponente (B) neben dem Härtungsmittel für die Polymerisation des Reaktivharzes noch Wasser. Derartige Systeme sind beispielsweise in DE 4231161 A1 beschrieben.

Die Reaktivharz-Zusammensetzungen bzw. Reaktivharz-Systeme sind in vielen Bereichen, bei denen sonst üblicherweise ungesättigte Polyesterharze, Vinylesterharze oder Vinylesterurethanharze Verwendung finden, einsetzbar. Sie können insbesondere zur Herstellung von Reaktivharzmörteln für bauliche Anwendungen, wie die chemische Befestigung verwendet werden.

Die Reaktivharz-Zusammensetzungen finden üblicherweise Verwendung als Mehrkomponenten-System, typischerweise Zweikomponenten-System aus einer Reaktivharzkomponente (A) und einer Härterkomponente (B). Dieses Mehrkomponenten-System kann in Form eines Patronen-Systems, eines Kartuschen-Systems oder eines Folienbeutel-Systems vorliegen. Bei der bestimmungsgemäßen Verwendung des Systems werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen, in das mit dem aushärtenden Reaktivharz beschickte Bohrloch eingebracht und entsprechend justiert werden.

Ein solches Reaktivharz-System findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eignet es sich zur chemischen Befestigung von Verankerungsmitteln, wie Ankern, Bewehrungseisen, Schrauben und dergleichen, in Bohrlöchern, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein, Glas und dergleichen, und metallischen Untergründen, wie solche aus Stahl. In einer Ausführungsform ist der Untergrund des Bohrlochs Beton, und das Verankerungsmittel besteht aus Stahl oder Eisen. In einer weiteren Ausführungsform ist der Untergrund des Bohrlochs Stahl, und das Verankerungsmittel besteht aus Stahl oder Eisen.

Die Erfindung wird im Folgenden anhand einer Reihe von Beispielen näher erläutert. Alle Beispiele und Abbildungen stützen den Umfang der Ansprüche. Die Erfindung ist jedoch nicht auf die spezifischen, in den Beispielen und Abbildungen gezeigten Ausführungsformen beschränkt.

## BEISPIELE

Alle hier aufgelisteten Bestandteile der Zusammensetzungen sind - soweit nicht anders angegeben - kommerziell erhältlich und wurden in der kommerziell üblichen Qualität eingesetzt.

Alle in den Beispielen gemachten %- und ppm-Angaben beziehen sich auf das Gesamtgewicht der beschriebenen Zusammensetzung als Kalkulationsbasis, soweit nicht anders angegeben.

### Herstellungsbeispiel 1: Herstellung UMA-Reaktivharz

Tabelle 1: Rezepturen der UMA-Harzreihe mit unterschiedlichen Inhibitorkonzentrationen (in Gew.-%).

| Verbindung | Funktion | Beispiele UMA-Harze | | | | | |
|---|---|---|---|---|---|---|---|
| | | A1 | A2 | A3 | A4 | A5 | A6 |
| Lineares UMA (Urethan (65:35 in HMPA) | Harz | 45,00 | 44,97 | 45,00 | 44,99 | 44,98 | 44,96 |
| Hydroxypropylmethacrylat | Reaktivverdünner | 20,00 | 19,99 | 20,00 | 20,00 | 19,99 | 19,98 |
| 1,4-Butandioldimethacrylat | Reaktivverdünner | 32,93 | 32,90 | 32,78 | 32,92 | 32,76 | 32,90 |
| Diisopropanol-p-toluidin | Beschleuniger | 2,00 | 2,00 | 2,00 | 2,00 | 2,00 | 2,00 |
| tert-Butylbrenzkatechin | Inhibitor | 0,05 | 0,12 | 0,2 | 0,22 | 0,25 | 0,28 |
| 4-Hydroxy-Tempo | Inhibitor | 0,025 | 0,025 | 0,025 | 0,025 | 0,025 | 0,025 |

Hydroxypropylmethacrylat vertrieben von GEO Specialty Chemicals, Großbritannien; 1,4-Butandioldimethacrylat vertrieben von Evonik Industries AG, Deutschland; Diisopropanol-p-toluidin vertrieben von BASF SE, Deutschland; tert-Butylbrenzkatechin vertrieben von Rhodia Opération, Frankreich; 4-Hydroxy-Tempo vertrieben von Evonik Industries AG, Deutschland

*Synthesevorschrift UMA-Harz A1*

In einem 1L-Kunststoffbehälter wurden bei Raumtemperatur 270 g lineares UMA (65:35 Vol-% in HPMA) vorgelegt und mit 120,0 g Hydroxypropylmethacrylat und 197,55 g 1,4-Butandioldimethacrylat verdünnt. Im Anschluss wurden 12,0 g Diisopropanol-p-toluidin sowie 0,30 g tert-Butylbrenzkatechin und 0,15 g Tempol zugegeben und die Mischung 6 h bei Raumtemperatur (500 U/min) gerührt, bis sich alle Feststoffe gelöst haben.

*Vorschrift Nachinhibierung UMA-Harz A2*

In einem 1L-Kunststoffbehälter wurden bei Raumtemperatur 299,79 g des Harzes A1 vorgelegt und 0,21 g tert-Butylbrenzkatechin zugegeben und die Mischung 2 h bei Raumtemperatur (500 U/min) gerührt, bis sich der Feststoff gelöst hat.

**Herstellungsbeispiel 2: Herstellung E2BADMA-Reaktivharz**

Tabelle 2: Rezepturen der E2BADMA-Harzreihe mit unterschiedlichen Inhibitorkonzentrationen (in Gew.-%).

| Verbindung | Funktion | Beispiele E2BADMA-Harze | | | | |
|---|---|---|---|---|---|---|
| | | B1 | B2 | B3 | B4 | B5 |
| SR 348 L | Harz | 50,00 | 49,97 | 50,00 | 49,99 | 49,96 |
| Hydroxypropylmethacrylat | Reaktivverdünner | 30,00 | 29,98 | 30,00 | 29,99 | 29,98 |
| 1,4-Butandioldimethacrylat | Reaktivverdünner | 17,96 | 17,94 | 17,78 | 17,75 | 17,74 |
| Diisopropanol-p-toluidin | Beschleuniger | 2,00 | 1,99 | 2,00 | 2,00 | 2,00 |
| tert-Butylbrenzkatechin | Inhibitor | 0,02 | 0,08 | 0,2 | 0,22 | 0,28 |
| 4-Hydroxy-Tempo | Inhibitor | 0,025 | 0,025 | 0,025 | 0,025 | 0,025 |

E2BADMA (Ethoxyliertes Bisphenol A Dimethacrylat) (SR 348 L) vertrieben von Sartomer Arkema, Frankreich; Hydroxypropylmethacrylat vertrieben von GEO Specialty Chemicals, Großbritannien; 1,4-Butandioldimethacrylat vertrieben von Evonik Industries AG, Deutschland; Diisopropanol-p-toluidin vertrieben von BASF SE, Deutschland; tert-Butylbrenzkatechin vertrieben von Rhodia Opération, Frankreich; 4-Hydroxy-Tempo vertrieben von Evonik Industries AG, Deutschland

*Synthesevorschrift E2BADMA-Harz B1*

In einem 1L-Kunststoffbehälter wurden bei Raumtemperatur 300 g SR 348 L vorgelegt und mit 180,0 g Hydroxypropylmethacrylat und 107,73 g 1,4-Butandioldimethacrylat verdünnt. Im Anschluss wurden 12,0 g Diisopropanol-p-toluidin sowie 0,12 g tert-Butylbrenzkatechin und 0,15 g Tempol zugegeben und die Mischung 6 h bei Raumtemperatur (500 U/min) gerührt, bis sich alle Feststoffe gelöst haben.

*Vorschrift Nachinhibierung E2BADMA-Harz B2*

In einem 1L-Kunststoffbehälter wurden bei Raumtemperatur 299,82 g des Harzes B1 vorgelegt und 0,18 g tert-Butylbrenzkatechin zugegeben und die Mischung 2 h bei Raumtemperatur (500 U/min) gerührt, bis sich der Feststoff gelöst hat.

**Testbeispiel 1: Gelzeit**

Die **Gelzeit** wurde wie folgt ermittelt:
Gemessen wurde die Gelzeit (für das Reaktivharz mit $t_{hg25°C}$ bezeichnet) ausgedrückt als die Zeitspanne gemessen vom Zeitpunkt der Zugabe eines Initiators zur Initialisierung der Härtung an bis zu dem Zeitpunkt, bei dem die Zusammensetzung eine Temperatur von 35°C erreicht hat. Die Messung erfolgte wie folgt:

Gemäß DIN 16945 (Punkt 6.2 und 6.3) wurde die Harzgelierzeit der Harze A1-A6 bzw. B1-B5 mit jeweils 50,0 g Harz und der in Tabelle 3 wiedergegebenen Konzentration des Härters (Perkadox 20 S) kombiniert und die Gelzeit mit einem herkömmlichen Gerät (GELNORM® Geltimer, Fa. WKS Informatik) bei einer Starttemperatur von 25°C durchgeführt (Doppelbestimmung) und die Zeit bis zum Erreichen der 35°C-Marke ausgewertet. Die Mischung wurde hierzu nach Zugabe des Initiators bis zu einer Höhe von 4 cm unterhalb des Randes in ein Teströhrchen gefüllt, wobei das Teströhrchen bei einer Temperatur von 25°C gehalten wurde (DIN 16945, DIN EN ISO 9396). Ein Glasstab oder eine Spindel wurde mit 10 Hüben pro Minuten in der Mischung auf und ab bewegt. Die Gelzeit entspricht der Zeitspanne nach Zugabe des Initiators, nach der eine Temperatur von 35°C in der Mischung gemessen wurde.

Tabelle 3 zeigt die verschiedenen Harze und deren Gelzeiten mit entsprechendem Härtergehalt. Die UMA-Reaktivharze haben eine Gelzeit von ca. 2,6-4 Min., die E2BADMA- Reaktivharze haben eine Gelzeit von ca. 3,5-4 min.

**Tabelle 3:** Gelzeiten der hergestellten Harze.

| Harz | Härtungsmittel [%] | Gelzeit (35°C) [min] | Harz | Härtungsmittel [%] | Gelzeit (35°C) [min] |
|------|--------------------|-----------------------|------|--------------------|-----------------------|
| A1 | 1 | 3,96 | B1 | 1 | 3,94 |
| A2 | 3 | 3,83 | B2 | 3 | 3,98 |
| A3 | 5 | 3,13 | B3 | 5 | 3,90 |
| A4 | 7 | 2,64 | B4 | 7 | 3,53 |
| A5 | 9 | 2,61 | B5 | 11 | 3,85 |
| A6 | 11 | 3,05 | | | |

Gelzeiten wurden mit Perkadox 20 S, vertrieben von Akzo Nobel, Niederlande, gemessen.

**Herstellungsbeispiel 3: Patronen**

Die Patronen der Größe M12 für die Setzversuche wurden einzeln per Hand mit den in Tabelle 4 aufgeführten Stoffen abgefüllt.

**Tabelle 4:** Verwendete Stoffe für die Patronenherstellung.

| Chemischer Name | Handelsname | Funktion | |
|-----------------|-------------|----------|---|
| Aluminiumoxyd (Korund) | Alodur RBT9 | Füllstoff | Außenbeutel |
| UMA- bzw. E2BADMA-Reaktivharz gemäß Herstellungs | | Harz | Außen beutel |
| Dibenzoylperoxyd | Retic BP 50 PW | Härter | Innenbeutel |

Alodur RBT9 vertrieben von Treibacher Schleifmittel, Deutschland; Retic BP 50 PW (50% mit Dicyclohexylphthalat) vertrieben von Oxido s.r.l., Italien.

*Härterkomponente*

Die genaue Zusammensetzung der rieselfähigen Härterkomponente ist in Tabelle 5 dargestellt.

**Tabelle 5:** Rezeptur Härterkomponente Perkadox 20 S.

| Chemischer Name | Funktion | Gew.-% |
|-----------------|----------|--------|
| Dibenzoylperoxid | Härtungsmittel | 40-55 |
| Dicyclohexylphthalat | Phlegmatisierungsmittel | 40-55 |
| Wasser | | 2,0 |
| Kieselsäure gefällt | Verdickungsmittel | 1,5 |
| Angaben gemäß Sicherheitsdatenblatt des Herstellers. | | |

*Innenbeutel*

Leere M12-Außenbeutel sowie Innenbeutel verschiedener Größen wurden aus der Serienproduktion entnommen. Nur eine optimale Durchmischung des Harz/Korund-Gemisches mit der Härterkomponente während des Setzvorganges führt zu der bestmöglichen Leistungsentfaltung der Patrone im Bohrloch. Um diese optimale Durchmischung zu gewährleisten sind aufeinander abgestimmte Füllhöhen des Harz/Korund-Gemisches im Außenbeutel und des Härters im Innenbeutel von essentieller Bedeutung.

Durch die Variation des Härtergehalts mussten zur Gewährleistung einer optimalen Füllhöhe des Härters folgende Anpassungen des Innenbeutels vorgenommen werden.

1. Verwendung verschiedener Innenbeutel-Seriengrößen und händisches Abwiegen/Abfüllen des rieselfähigen Härters bei 1, 3, 7 und 11 Gewichtsteilen
2. Bei 1, 7 und 11 Gewichtsteilen Härter: Vermengen des Härters mit unreaktivem Sand F32 zur Volumenvergrößerung im Innenbeutel

Tabelle 6 gibt die Dimensionen der entsprechend verwendeten Innenbeutel sowie deren Füllhöhen wieder.

**Tabelle 6:** Verwendete Innenbeutel für die Patronenherstellung.

| Härter [Gewichtsteile] | Innenbeutel Seriengröße | Durchmesser Innenbeutel [mm] | Füllhöhe Innenbeutel [mm] |
|---|---|---|---|
| 1 | M8 | 2,7 | 65 |
| 3 | M8 | 2,7 | 64 |
| 5 | M12 | 3,4 | 67 |
| 7 | M16 | 4,5 | 70 |
| 11 | M20 | 5,2 | 81 |

*Vorschrift Abfüllung Innenbeutel (Beispiel 11%)*

Ein aus der Serienproduktion stammender Innenbeutel der Größe M20 mit einem Durchmesser von 5,2 mm wurde an einem Ende aufgeschnitten und entleert. Anschließend wurden 0,988 g Härter mit 0,6 g F32 Sand vermischt und dieses Gemenge in den Innenbeutel eingefüllt, bevor der Beutel auf eine Länge von 107 mm abgeschweißt wurde.

*Patronenherstellung*

Bei der Patronenherstellung wurde ein Volumenverhältnis Harz-Korund von 43:57 bzw. ein Gewichtsverhältnis von 16,9:83,1 gewählt und nicht verändert. Tabelle 7 listet die Rezepturen der hergestellten Patronen auf.

**Tabelle 7:** Übersicht hergestellte Patronen; Angaben in Gewichtsteilen.

| | | Beispiele Patronen | | | | |
|---|---|---|---|---|---|---|
| **Substanz** | **Funktion** | **C1** | **C2** | **C3** | **C4** | **C5** |
| Korund | Füllstoff | 83,1 | 83,1 | 83,1 | 83,1 | 83,1 |
| A1 | Harz | 16,9 | | | | |
| A2 | Harz | | 16,9 | | | |
| A3 | Harz | | | 16,9 | | |
| A4 | Harz | | | | 16,9 | |
| A6 | Harz | | | | | 16,9 |
| BPO | Härter | 1 | 3 | 5 | 7 | 11 |
| **Substanz** | **Funktion** | **D1** | **D2** | **D3** | **D4** | **D5** |
| Korund | Füllstoff | 83,1 | 83,1 | 83,1 | 83,1 | 83,1 |

(fortgesetzt)

| Substanz | Funktion | D1 | D2 | D3 | D4 | D5 |
|---|---|---|---|---|---|---|
| B1 | Harz | 16,9 | | | | |
| B2 | Harz | | 16,9 | | | |
| B3 | Harz | | | 16,9 | | |
| B4 | Harz | | | | 16,9 | |
| B5 | Harz | | | | | 16,9 |
| BPO | Härter | 1 | 3 | 5 | 7 | 11 |

*Vorschrift Patronenabfüllung (Beispiel C3)*

In einen leeren Außenbeutel der Größe M12, welcher seitens der Schwanzseite aufgeschnitten wurde, wurde Härter enthaltend 1,25 g Härtungsmittel im Innenbeutelplatziert. Etwa ein Drittel der Korundmenge von 20,73 g wurde eingefüllt um ein Verrutschen des Innenbeutels zu unterbinden. Anschließend wurden 4,21 g Harz A3 in die Patrone eingewogen und die restliche Korundmenge dazugegeben. Zum Verschließen der Patrone wurde diese auf eine Länge von 127 mm abgeschweißt.

**Testbeispiel 2: Messung der Verbundspannung und Wärmeformbeständigkeit**

Die Messungen der Lastwerte wurden unter den in Tabelle 8 festgelegten Testbedingungen durchgeführt.

**Tabelle 8:** Testbedingungen der Auszugstests.

| Test | Größe | Beton-Festigkeitsklasse | Aushärtung | Temperierung | Auszieh-Temperatur |
|---|---|---|---|---|---|
| A1 | M12 | C20/25 | 24 h bei 25°C | - | 25°C |
| A21 (50°C) | M12 | C20/25 | 24 h bei 25°C | 24 h bei 80°C | 50°C |
| A21 (80°C) | M12 | C20/25 | 24 h bei 25°C | 24 h bei 80°C | 80°C |

Die Lastwerte der Versuche A1, A21 (50°C) und A21 (80°C) wurden mit Patronen der Größe M12 in Beton der Festigkeitsklasse C20/25 durch Auszugstests nach einer Aushärtezeit von 24 h und einer Einbindetiefe von 7xd ermittelt. Zusätzlich wurde vor den Auszugstests bei erhöhter Temperatur der Beton 24 h bei entsprechender Temperatur gelagert.
A1 bestimmt demnach die maximale Verbundspannung bei Raumtemperatur (Befestigungspunkt bei Raumtemperatur installiert und gezogen).
A21 bestimmt die maximale Verbundspannung bei erhöhter Temperatur (Befestigungspunkt bei Raumtemperatur installiert und bei entsprechender Temperatur temperiert und gezogen).
Die Versuchsbedingungen A1 und A21 wurden entsprechend der Richtlinie ETAG 001 Teil 5, Kapitel 5 (Ausgabe vom April 2013) durchgeführt. Die Tests entsprechend der Beschreibung unter Punkten 5.1.3 ff. (admissible service conditions for bonded anchors - siehe auch Tabelle 5.6, confined, m = medium size = M12, Gewindestange der Stahlgüte 12.9).
Die Installation der Patronen erfolgte entsprechend der Gebrauchsanleitung für Hilti HVU2 (Artikelnummer 21692263, Ausgabe A1-03.2017).
In Tabelle 9 sind die Lastwerte der durchgeführten Auszugstests der mit UMA-Harz bzw. E2BADMA-Harz gefüllten Patronen sowie die zugehörigen $\alpha_2$-Werte zu sehen.

**Tabelle 9:** A1 und A21-Lastwerte der Patronen C1-C5 bzw. D1-D5 in N/mm$^2$.

| Patrone | Härtergehalt [Gewichtsteile] | A1 | A21 (50°C) | A21 (80°C) | $\alpha_2$ |
|---|---|---|---|---|---|
| C1 | 1 | 32,5 | 25,5 | 20,4 | 0,78 |
| C2 | 3 | 31,0 | 25,4 | 20,7 | 0,82 |
| C3 | 5 | 30,4 | 26,6 | 19,3 | 0,88 |
| C4 | 7 | 29,0 | 25,1 | 17,9 | 0,87 |

(fortgesetzt)

| Patrone | Härtergehalt [Gewichtsteile] | A1 | A21 (50°C) | A21 (80°C) | $\alpha_2$ |
|---------|------------------------------|------|------------|------------|------------|
| C5 | 11 | 27,3 | 21,0 | 16,5 | 0,77 |
| D1 | 1 | 30,1 | 24,1 | 18,0 | 0,80 |
| D2 | 3 | 28,7 | 25,0 | 22,3 | 0,87 |
| D3 | 5 | 32,8 | 27,5 | 19,0 | 0,84 |
| D4 | 7 | 29,4 | 26,2 | 20,2 | 0,89 |
| D5 | 11 | 29,5 | 22,0 | 16,7 | 0,75 |

Zur Bewertung des Einflusses des Härtergehalts auf die entsprechenden Wärmeformbeständigkeiten der Mörtel ist die Berechnung des $\alpha_2$-Wertes von Bedeutung (Tabelle 9).

$$\text{Die Berechnung erfolgte gemäß } \alpha_2 = \tau_{u,m}(50°C)/\tau_{u,m}(RT) \text{ (Variationskoeffizienten} < 15\%).$$

Aus Tabelle 9 ist ein klarer Zusammenhang zwischen dem Härtergehalt und der Wärmeformbeständigkeit, ausgedrückt durch $\alpha_2$, zu erkennen. Bei Patronen C1 bis C5 mit dem UMA-Harz und Korund als Füllstoff liegen die geringsten Wärmeformbeständigkeiten bei 1 und 11 Gewichtsteilen vor. Bei 5 und 7 Gewichtsteilen Härtergehalt hingegen ist die größte Temperaturbeständigkeit von $\alpha_2$= 0,88 bzw. 0,87 zu beobachten.

Ein ähnliches Ergebnis ist bei Patronen D1 bis D5 zu beobachten. Ein sehr geringer sowie ein sehr hoher Härtergehalt von 1 bzw. 11 Gewichtsteilen führen jeweils zu den geringsten Wärmeformbeständigkeiten des Systems, vor allem bei hoher Härterkonzentration von 11 Gewichtsteilen offenbart das System eine schwache Temperaturperformance. Die höchste Temperaturbeständigkeit wird hingegen bei 7 Gewichtsteilen erreicht.

Diese Ergebnisse zeigen, dass sowohl geringe als auch hohe Härterkonzentrationen zu einer Schwächung der Mörtelmatrix bei höherer Temperatur führen. Die verminderte Wärmeformbeständigkeit ist unmittelbar auf die niedrige bzw. hohe Konzentrationen anwesender Radikale zurückzuführen da sowohl beim UMA-Harz als auch beim E2BADMA-Harz der gleiche Trend zu erkennen ist.

**Hülsentest**

Mit Hilfe des Hülsentests lässt sich die innere Festigkeit eines Injektionsmörtels abschätzen. Zur Verifikation der erhaltenen Auszugsergebnisse wurden mit den entsprechenden UMA-Harzen Hülsentests mit BPO-Konzentrationen von 3-11 Gewichtsteilen durchgeführt. Da die Auszugsversuche mit einem Patronensystem durchgeführt wurden, wurde der durchgeführte Hülsentest ebenso an dieses System angelehnt. Folgende Anpassungen wurden vorgenommen:

- Verwendung von Normalkorund NK F054 der Fa. Westermineralien (205-355 $\mu$m)
- Rund um die Öffnung der Innengewindehülse wurde ein Klebestreifen fixiert, um während des Setzvorgangs ein Zurückfließen verspritzter Masse sicherzustellen
- Setzvorgang mit Hilti SF 100-A Akkuschrauber mit Setzwerkzeug, Nuss und Doppelmutter; Stufe 2; 3 Sekunden im Rechtsdreh
- Zentrierung der Ankerstangen nach dem Setzvorgang mit einer Justierhilfe
- Kürzen der Hülsen nach Aushärtezeit auf 30 mm durch Absägen. Bei Verwendung der Hülsen mit voller Einbindetiefe von 45 mm tritt Stahlversagen auf.
- Für Tests bei erhöhter Temperatur wurde die entsprechende Hülsenhalterung der Zwick-Maschine mind. 2 h vorher auf die entsprechende Temperatur temperiert.

In Tabelle 10 sind die zugehörigen Versuchsergebnisse ersichtlich.

**Tabelle 10:** Ergebnisse des Hülsentests. 4-6 Hülsen pro Wert.

| Hülse | Harz | Härtergehalt [Gewichtsteile] | Scherkräfte in [N/mm$^2$] | | | |
|-------|------|------------------------------|------|------|------|----------------------|
| | | | RT | 50°C | 80°C | 50°C/RT ("$\alpha_2$") |
| E1 | A2 | 3 | 59,0 | 50,3 | 49,0 | 0,85 |

(fortgesetzt)

| Hülse | Harz | Härtergehalt [Gewichtsteile] | Scherkräfte in [N/mm$^2$] | | | |
|---|---|---|---|---|---|---|
| | | | RT | 50°C | 80°C | 50°C/RT ("$\alpha_2$") |
| E2 | A3 | 5 | 56,4 | 55,6 | 46,7 | 0,99 |
| E3 | A5 | 9 | 54,2 | 45,6 | 40,2 | 0,84 |
| E4 | A6 | 11 | 49,9 | 42,8 | 33,8 | 0,86 |

*Vorschrift Hülsentest (Beispiel E2)*

Korund der Korngröße F054 (49,09 g) wurde zusammen mit 9,98 g Harz A3 und 1,05 g des Härters in einer Speedmixerdose eingewogen und 20 Sekunden bei 1500 U/min im Speedmixer gemischt. Die Mischung wurde mit Hilfe eines Plastiktrichters in 5 Innengewindehülsen HIS-N, beispielsweise Artikelnummer 258017, gefüllt.

Anschließend wurde auf jede Hülse eine setzbare HAS-Ankerstangen M8 (Festigkeit 12.9 entsprechend DIN EN ISO 898-1:2013-05) gesetzt und die Justierhilfe aufgesetzt. Nach Kürzen der Hülsen auf 30 mm wurde der Auszugstests bei entsprechender Temperatur an einer Zwick-Maschine durchgeführt.

Aus Tabelle 10 ist ersichtlich, dass bei 5 Gewichtsteilen Härter die größte Wärmeformbeständigkeit in Form des größten $\alpha_2$-Wertes von 0,99 auftritt. Bei hohen Härterkonzentrationen von 9 und 11 Gewichtsteilen zeigen sich geringere Temperaturbeständigkeiten von 0,84 und 0,86.

**Patentansprüche**

1. Verwendung einer Reaktivharz-Zusammensetzung für die chemische Befestigung eines Verankerungsmittels in einem Bohrloch umfassend:

   eine Harzkomponente (A) enthaltend ein Reaktivharz, und
   eine Härterkomponente (B) enthaltend ein Härtungsmittel, wobei
   die Reaktivharz-Zusammensetzung Härtungsmittel in einer Menge von mindestens 12 Gew.-% oder mehr und höchstens 48 Gew.-% oder weniger bezogen auf das Reaktivharz enthält.

2. Die Verwendung nach Anspruch 1, wobei das Reaktivharz ein Vinylesterharz umfasst.

3. Die Verwendung nach Anspruch 2, wobei das Vinylesterharz ein Vinylesterurethanharz, vorzugsweise ein Urethan(meth)acrylatharz, ist.

4. Die Verwendung nach Anspruch 2, wobei das Vinylesterharz ein ethoxyliertes Bisphenol-A-di(meth)acrylat mit einem Ethoxylierungsgrad von 2 bis 10, vorzugsweise von 2 bis 4, ist.

5. Die Verwendung nach einem der vorhergehenden Ansprüche, wobei die Reaktivharz-Zusammensetzung Härtungsmittel in einer Menge von mindestens 14 Gew.-% oder mehr, bevorzugt mindestens 16 Gew.-% oder mehr, am bevorzugtesten mindestens 18 Gew.-% oder mehr, bezogen auf das Reaktivharz enthält.

6. Die Verwendung nach einem der vorhergehenden Ansprüche, wobei die Reaktivharz-Zusammensetzung Härtungsmittel in einer Menge von höchstens 46 Gew.-% oder weniger, bevorzugt höchstens 44 Gew.-% oder weniger, am bevorzugtesten höchstens 42 Gew.-% oder weniger, bezogen auf das Reaktivharz enthält.

7. Die Verwendung nach einem der vorhergehenden Ansprüche, wobei das Härtungsmittel ein Peroxid, vorzugsweise Benzoylperoxid, ist.

8. Verwendung nach einem der vorhergehenden Ansprüche, wobei mindestens eine der Komponenten (A) oder (B) einen Füllstoff enthält, wobei der Füllstoff bevorzugt aus der Gruppe bestehend aus Quarz, Glas, Korund, Porzellan, Steingut, Leichtspat, Schwerspat, Gips, Talk, Kreide oder Gemischen davon ausgewählt ist, und wobei der Füllstoff in Form von Sand, Mehl, oder Formkörpern vorliegen kann.

9. Verwendung nach einem der vorhergehenden Ansprüche zur Erhöhung der Verbundspannung des mit der Reaktivharz-Zusammensetzung chemisch befestigten Verankerungsmittels in einem Bohrloch.

10. Verwendung nach einem der vorhergehenden Ansprüche zur Erhöhung der Wärmeformbeständigkeit des mit der Reaktivharz-Zusammensetzung chemisch befestigten Verankerungsmittels in einem Bohrloch.

11. Verwendung nach einem der vorhergehenden Ansprüche, wobei das Verankerungsmittel aus Stahl oder Eisen ist.

12. Verwendung nach einem der vorhergehenden Ansprüche, wobei das Bohrloch ein Bohrloch in mineralischem oder metallischem Untergrund ist, bevorzugt einem Untergrund ausgewählt aus der Gruppe bestehend aus Beton, Porenbeton, Ziegelwerk, Kalksandstein, Sandstein, Naturstein, Glas und Stahl.

13. Verfahren zur chemischen Befestigung eines Verankerungsmittels in einem Bohrloch, **gekennzeichnet dadurch, dass** zur Befestigung eine Reaktivharz-Zusammensetzung verwendet wird, wobei die Reaktivharz-Zusammensetzung umfasst:

   eine Harzkomponente (A) enthaltend ein Reaktivharz, und
   eine Härterkomponente (B) enthaltend ein Härtungsmittel, wobei
   die Reaktivharz-Zusammensetzung Härtungsmittel in einer Menge von mindestens 12 Gew.-% oder mehr und höchstens 48 Gew.-% oder weniger bezogen auf das Reaktivharz enthält.

**Europäisches Patentamt**
**European Patent Office**
**Office européen des brevets**

# EUROPÄISCHER RECHERCHENBERICHT

Nummer der Anmeldung

EP 19 21 7407

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2011 017626 B4 (HILTI AG [LI]) 3. Januar 2013 (2013-01-03) * Absatz [0052] * * Absatz [0064] - Absatz [0068] * ----- | 1-13 | INV. C04B26/02 C04B26/06 C04B26/16 C04B111/00 |
| X | WO 2015/007835 A1 (HILTI AG [LI]) 22. Januar 2015 (2015-01-22) * Beispiele 1, 2 * * Tabelle 1 * ----- | 1,5,6, 8-13 | |
| X | DE 10 2015 113352 A1 (FISCHERWERKE GMBH & CO KG [DE]) 24. März 2016 (2016-03-24) * Beispiel 3 * ----- | 1,5,6, 8-13 | |
| A | EP 2 851 352 A1 (HILTI AG [LI]) 25. März 2015 (2015-03-25) * das ganze Dokument * ----- | 1-13 | |
| A | WO 2014/064084 A1 (HILTI AG [LI]) 1. Mai 2014 (2014-05-01) * das ganze Dokument * ----- | 1-13 | |

**RECHERCHIERTE SACHGEBIETE (IPC)**

C04B

Der vorliegende Recherchenbericht wurde für alle Patentansprüche erstellt

| Recherchenort | Abschlußdatum der Recherche | Prüfer |
|---|---|---|
| Den Haag | 4. Juni 2020 | Placke, Daniel |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 21 7407

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-06-2020

| Im Recherchenbericht angeführtes Patentdokument | Datum der Veröffentlichung | Mitglied(er) der Patentfamilie | Datum der Veröffentlichung |
|---|---|---|---|
| DE 102011017626 B4 | 03-01-2013 | KEINE | |
| WO 2015007835 A1 | 22-01-2015 | EP 2826797 A1 | 21-01-2015 |
| | | WO 2015007835 A1 | 22-01-2015 |
| DE 102015113352 A1 | 24-03-2016 | CN 105440658 A | 30-03-2016 |
| | | DE 102015113352 A1 | 24-03-2016 |
| | | DE 202015009664 U1 | 06-12-2018 |
| | | DE 202015009665 U1 | 06-12-2018 |
| | | EP 3000792 A1 | 30-03-2016 |
| | | JP 6579880 B2 | 25-09-2019 |
| | | JP 2016069270 A | 09-05-2016 |
| | | US 2016083563 A1 | 24-03-2016 |
| EP 2851352 A1 | 25-03-2015 | AU 2014323099 A1 | 07-04-2016 |
| | | AU 2018203265 A1 | 31-05-2018 |
| | | CA 2924367 A1 | 26-03-2015 |
| | | CN 105579416 A | 11-05-2016 |
| | | EP 2851352 A1 | 25-03-2015 |
| | | EP 3046886 A1 | 27-07-2016 |
| | | ES 2728536 T3 | 25-10-2019 |
| | | JP 6604940 B2 | 13-11-2019 |
| | | JP 2016539191 A | 15-12-2016 |
| | | RU 2016114884 A | 24-10-2017 |
| | | US 2016236983 A1 | 18-08-2016 |
| | | US 2019256420 A1 | 22-08-2019 |
| | | WO 2015040143 A1 | 26-03-2015 |
| WO 2014064084 A1 | 01-05-2014 | CA 2889285 A1 | 01-05-2014 |
| | | CN 104822641 A | 05-08-2015 |
| | | DE 102012219480 A1 | 15-05-2014 |
| | | EP 2911996 A1 | 02-09-2015 |
| | | ES 2674350 T3 | 29-06-2018 |
| | | JP 2016500737 A | 14-01-2016 |
| | | US 2015232253 A1 | 20-08-2015 |
| | | WO 2014064084 A1 | 01-05-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0713015 B1
- DE 102011017626 B4
- US 3297745 A
- US 3772404 A
- US 4618658 A
- GB 2217722 A1
- DE 3744390 A1
- DE 4131457 A1
- US 2011071234 A
- DE 2312559 A1
- US 3629187 A
- EP 44352 A1
- DE 19902685 A1
- EP 0684906 A1
- DE 4111828 A1
- DE 19961342 A1
- WO 2010108939 A1
- DE 102011077248 B1
- DE 19956509 A1
- DE 19531649 A1
- EP 1935860 A1
- US 20020091214 A1
- WO 02079341 A
- WO 02079293 A
- WO 2011128061 A1
- DE 102009059210
- DE 4231161 A1

**In der Beschreibung aufgeführte Nicht-Patentliteratur**

- Richtlinie ETAG 001 Teil 5. April 2013